(19) Europäisches Patentamt
European Patent Office
Office européen des brevets

(11) **EP 3 438 999 A1**

(12) **EUROPEAN PATENT APPLICATION**
published in accordance with Art. 153(4) EPC

(43) Date of publication:
06.02.2019 Bulletin 2019/06

(51) Int Cl.:
*H01G 9/02* (2006.01)          *H01G 11/52* (2013.01)
*H01M 2/16* (2006.01)

(21) Application number: 17774606.2

(22) Date of filing: 22.03.2017

(86) International application number:
PCT/JP2017/011532

(87) International publication number:
WO 2017/170065 (05.10.2017 Gazette 2017/40)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 28.03.2016 JP 2016064769

(71) Applicant: Nippon Kodoshi Corporation
Kochi-shi, Kochi 781-0395 (JP)

(72) Inventors:
• FUKUNAGA, Ryoichi
  Kochi-shi, Kochi 781-0395 (JP)
• WADA, Norihiro
  Kochi-shi, Kochi 781-0395 (JP)
• TANAKA, Kosuke
  Kochi-shi, Kochi 781-0395 (JP)
• IGAWA, Atsushi
  Kochi-shi, Kochi 781-0395 (JP)

(74) Representative: DREISS Patentanwälte PartG mbB
Friedrichstraße 6
70174 Stuttgart (DE)

(54) **SEPARATOR FOR ELECTROCHEMICAL ELEMENT AND ELECTROCHEMICAL ELEMENT**

(57)    A separator for electrochemical elements that interposes between paired electrodes, is made of a nonwoven fabric formed by accumulating fibers in a sheet form, and retains an electrolytic solution. Frequency of nonwoven fabric pores having diameters of 0.05 to 1.00 $\mu$m is 90% or greater with respect to all pores, frequency of mode of pore diameter is 60% or greater with respect to the frequency in the entire interval, and frequency within 10% above or below mode of pore diameter of the separator is 75% or greater with respect to the frequency in the entire interval. As a result, a separator for electrochemical elements having both sufficient shielding property and thinness, excellent wettability and liquid retention of electrolytic solutions, and heat resistance, and an electrochemical element using the separator are provided.

**EP 3 438 999 A1**

**Description**

TECHNICAL FIELD

The present invention relates to a separator for electrochemical elements and an electrochemical element.

BACKGROUND ART

Electrochemical elements such as condensers or capacitors, and batteries have also been employed in new fields such as automobile-related equipment in recent years, and continued market expansion is anticipated.

For example, lithium-ion secondary batteries are used as a power supply etc. in electric vehicles and hybrid vehicles, electric double-layer capacitors are used for energy regeneration etc., and aluminum electrolytic capacitors and electric double-layer capacitors are used for electronic control units (ECU) for fuel spray, transmission, electronic throttle, antilock brake systems etc., motor control, battery control, hybrid electronic vehicle (HEV) system control, and conversion from an external AC power to DC.

Since there is a chance that a short-circuit defect in such electrochemical elements leads to trouble immediately, high reliability is required.

With electronic devices, there is great demand for electrochemical elements to be mounted on a circuit board to be made thinner and/or more compact. Moreover, electrochemical elements used as power supply for portable devices that can be used for a long period of time from charging one time are also in demand.

That is, while an electrochemical element such as an aluminum electrolytic capacitor is mounted on a circuit board for the purpose of smoothing AC current and/or supplying power to the electronic element on the circuit board, there is demand for the electrochemical elements for such applications to be low-profile and smaller. Furthermore, while the lithium-ion secondary batteries that are often used as a power supply for portable devices are small and thin, high capacity that can be used over a long period of time is in demand.

Due to expansion of such applications and improvement in performance of devices to be used, reliability of long-time use endurance, and improvement in performance such as charging and discharging characteristics and output characteristics are more in demand for electrochemical elements. Therefore, there are various proposals (e.g., Patent Documents 1 and 2) with the aim of improving characteristics such as shielding property of separators used for electrochemical elements.

The separator described in Patent Document 1 controls beating degree and fiber length of solvent spun cellulose fibers and improves denseness and liquid retention of the separator. More specifically, control of beating degree and fiber length of solvent spun cellulose fibers keeps the average pore diameter to 0.1 $\mu$m or greater and the maximum pore diameter to 6.0 $\mu$m or less, so as to achieve a separator having good shielding property and electrolyte retaining power.

Moreover, Patent Document 2 discloses a microporous film, which is made of thermoplastic resin with polyolefin resin as a main constituent, used as a separator for electrolytic capacitors etc., wherein stretching after the film is formed makes minute pores.

Prior Art Documents

Patent Documents

   Patent Document 1: International Publication No. WO 2012/008559
   Patent Document 2: JP 2000-198866A

DISCLOSURE OF THE INVENTION

Problem to be Solved by the Invention

However, the separator described in Patent Document 1 is a separator made of nonwoven fabric using refined solvent spun cellulose fibers, and since shielding property of the separator decreases when responding to recent demand for thinning, it is difficult to make the separator thin while maintaining a high shielding property.

Moreover, the separator described in Patent Document 2 is made of polyolefin resin as a material, and cannot resolve problems of having a low wettability against electrolytic solution, insufficient retention of electrolytic solution, and increase of resistance.

The separator made of a microporous film using polyolefin resin may have a function of preventing an electrochemical element (e.g., battery) from becoming hot to the degree of causing a thermal runaway; wherein the function is attained by the separator partially being melted or shrinked and thereby closing pores and blocking electric current flowing in the battery when the battery has become hot.

However, since flowing electric current is large with a high capacity and high output electrochemical element recently in demand, even if the electric current is blocked due to said closed pores, there is a chance that heat generation within the battery cannot be controlled, the entire separator is melted (meltdown), and an internal short-circuit occurs, leading to a thermal runaway.

In light of this problem, the present invention aims to provide a separator having both sufficient shielding property and thinness that are difficult to achieve with the conventional separator, and an electrochemical element using the separator.

Means of Solving the Problem

The present invention aims to resolve the above problems, and includes the following structure, for example, as means for achieving the above aim.

That is, a separator for electrochemical elements is characterized in that the separator interposes between paired electrodes, is made of a nonwoven fabric formed by accumulating fibers in a sheet form, and retains an electrolytic solution, and frequency of pores of the nonwoven fabric having diameters of 0.05 to 1.00 $\mu$m is 90% or greater of all pores.

Moreover, for example, the separator is characterized in that frequency of mode of pore diameter of the nonwoven fabric is 60% or greater with respect to frequency in the entire interval. Alternatively, the separator is characterized in that frequency within 10% above or below mode of pore diameter of the separator is 75% or greater with respect to the frequency in the entire interval.

Furthermore, for example, the separator is characterized in that porosity of the nonwoven fabric is 35 to 80%. Yet further, for example, the separator is characterized in that thickness of the nonwoven fabric is 5 to 30 $\mu$m.

Yet even further, for example, the separator is characterized in that the fibers forming the nonwoven fabric include regenerated cellulose fibers.

Yet even further, an electrochemical element characterized by using of any one of the above-described separators for electrochemical elements. For example, the electrochemical element is characterized by being any one of an aluminum electrolytic capacitor, an electric double-layer capacitor, a lithium-ion capacitor, a lithium primary battery, or a lithium-ion secondary battery.

Results of the Invention

According to the present invention, a separator for electrochemical elements that has both sufficient shielding property and thinness, and an electrochemical element that can be made compact, has a decreased short-circuit defect rate, and improved safety can be provided.

DESCRIPTION OF EMBODIMENTS

An embodiment of the present invention is explained in detail below.

To begin with, a separator for electrochemical elements according to this embodiment for implementing the present invention is described. Aluminum electrolytic capacitors, electric double-layer capacitors, lithium-ion capacitors, lithium primary batteries, lithium-ion secondary batteries etc., for example, are favorable as the electrochemical elements.

The main functions of the separator in the electrochemical elements are to separate paired electrodes and retain electrolytic solution. To separate the paired electrodes, it is desired for the separator to have a high shielding property. Along with expansion of applications of electrochemical elements, there has also been further demand for improvement in such electrochemical elements for separators. Moreover, the material of the separator requires electric insulation, and further requires lyophilicity (electrolytic solution affinity) in order to retain various kinds of electrolytic solution.

Cellulose is a separator material having the above functions. By applying shear force to the cellulose fibers and processing (refining), the fibers are made finer, and a paper and a nonwoven fabric are formed from these refined fibers. This achieves a very dense sheet.

The refined cellulose fibers are shorter than synthetic fibers and the like, and gaps in sheets are easier to fill, thereby improving shielding property of the separator. This allows wide use of separators made from cellulose fibers, and contribution to decrease in short-circuit defects of electrochemical elements.

The separator according to this embodiment is a separator for electrochemical elements having both sufficient shielding property and thinness, and excellent wettability against electrolytic solution, retention of electrolytic solution, and heat resistance. More specifically, it is a separator where frequency of pore diameters of 0.05 to 1.00 $\mu$m of the separator (hereinafter referred to as 'value A') is 90% or higher of all pores.

Note that 'pores' in the description below are pores that are measured using a method stipulated in "ASTM F0314-03".

Moreover, 'mode of pore diameter' means the most frequently occurring diameter with a pore diameter distribution of pores that are measured using a method stipulated in "'TEST METHOD B' of ASTM F316-03".

The inventors have found that the nonwoven fabric having a value A of 90% or higher has very small pore diameters with little fluctuation in pore diameter. When the value A is less than 90%, either the pore diameters are large, or fluctuation in pore diameter is greater.

The shielding property of the separator is important for reducing the short-circuit defect rate in electrochemical elements. In addition, making the pore size smaller is important for improving shielding property of the separator.

However, the inventors have found that by only making the pore size of the separator smaller, the shielding property cannot be improved above a fixed level.

This is thought to be due to the following reason.

With electrochemical elements, such as lithium-ion secondary batteries, if the concentration of lithium ions in the cathode becomes high, lithium is precipitated as capillary crystals (dendrite). This dendrite gradually grows in the pores of the separator, making both of the electrodes touch, and leading to a short circuit.

Since the dendrite will grow in portions with small growth resistance to dendrite, that is, in portions of the separator with small resistance (portions of the separator having relatively large pores), it is considered that only making the pore diameter of the separator smaller cannot improve the shielding property of the separator.

Moreover, since portions with larger pores of the separator have smaller resistance such as in capacitors, it is considered that a short-circuit defect may occur in a manner of lightning striking through the larger pores.

In this manner, the inventors have found that for improvement in shielding property of the separator for electrochemical elements, not only is size of pore diameter of the separator important, but also is having little fluctuation in pore diameter.

The separator of this embodiment has a nonwoven fabric structure formed by accumulating fibers in a sheet form, wherein the following method, for example, is available as a formation method for the nonwoven fabric.

The fibers are dispersed in water and then filtered through a net using a paper-making method so as to form a sheet. That is, a wet nonwoven fabric is made. A method using a Fourdrinier machine, a cylindrical machine, a tanmo machine, and/or a combination paper making machines made from a combination thereof is available as the formation method for the wet nonwoven fabric. However, it is also important that fluctuation of pore diameter is small, and if this is achieved, it is not limited to a separator made using a specific paper-making method given in this embodiment.

As a means for making the value A 90% or greater, a wet nonwoven fabric containing fibrillated regenerated cellulose fibers is compressed in the thickness direction by pressure regulating etc. As a result, a nonwoven fabric having a value A of 90% or greater is formed.

Shear force is applied in water to fibers that can be fibrillated and the resulting fibers are then processed (refined) so as to be made finer, and a nonwoven fabric is formed from these refined fibers. This improves denseness of the sheet.

It is particularly preferred to contain 30% by mass or greater of solvent spun cellulose fibers that are regenerated cellulose fibers and/or polynosic fibers as the fibers that can be fibrillated. These regenerated cellulose fibers have a high degree of crystallinity. The internal structure of the fibers is made of cellulose crystalline parts and non-crystalline parts, wherein the crystalline parts are adhered together via the non-crystalline parts so as to form fibers.

When these fibers are refined, the non-crystalline parts are broken down, and the crystalline parts detach from the fibers, resulting in generation of fibrils having a diameter of 1 $\mu$m or less. The separator constituted by these regenerated cellulose fibers has a very dense structure. Moreover, these fibrils are cellulose having an extremely high degree of crystallinity and therefore have high rigidity, the fibrils themselves are only slightly crushed flat and maintain a nearly circular cross-sectional shape even through being pressed in the paper making process, and the fibrils together make layers as a result of intertwining contact points and hydrogen bonding.

Therefore, the separator containing the fibrillated regenerated cellulose fibers has excellent ion permeability without any redundancy in ion flow channels even while having a very dense paper quality. When content of the fibrillated regenerated cellulose fibers is less than 30% by mass, the shielding property of the separator is decreased, and short-circuit defects of the electrochemical elements are increased or ion permeability of the separator is decreased, thereby increasing resistance of the electrochemical elements.

Fibers other than the fibrillated regenerated cellulose fibers may be contained as a raw material for the nonwoven fabric, wherein synthetic fibers and other cellulose fibers, for example, are not particularly limited and may be used. Polyester fibers such as polyethylene terephthalate, acrylic fibers such as polyacrylonitrile fibers, polyamide fibers such as nylon fibers and aramid fibers, and polyphenylene sulfide fibers, for example, are available as the synthetic fibers.

Moreover, non-fibrillated regenerated cellulose fibers, wood pulp such as broad leaf tree or conifer, and non-wood pulp such as manila hemp, sisal hemp, jute, or esparto are available as the other cellulose fibers.

Pulping of pulp may use a kraft method, a sulfite method, a soda method, etc., and not only typical paper-making pulp, but dissolving pulp or mercerized pulp may also be used. Furthermore, these pulps may be bleached.

For thickness regulation of the nonwoven fabric, use of compression equipment such as a calender roll or a touch roll, for example, is desired. The calender roll and the touch roll may be made of resin or metal. Moreover, a combined structure thereof is also possible. Furthermore, heat treatment may be carried out as needed during compression.

Note that if excessive linear pressure is applied, excessive pressure is applied to the sheet, the fibers are bound so as to fuse to each other making a film form, and resistance of the separator is easily increased. Meanwhile, if there is too little linear pressure, it cannot reduce to a desired pore diameter ratio, and a value A of 90% or greater cannot be achieved.

The nonwoven fabric is a sheet made of stacked fibers, wherein there are spaces within the sheet where fibers do not exist. In this embodiment, compressing after the sheet is formed reduces these spaces and shortens distance between fibers, thereby controlling the pore diameter. Note that if the thickness of the separator becomes thinner, shielding property of the separator often decreases.

In this embodiment, compression of the nonwoven fabric presses the fibers themselves in the nonwoven fabric into a slightly flat shape. As a result, denseness along the thickness of the nonwoven fabric is increased, and even if it is made thinner by compression, the shielding property is not reduced. The frequency of mode of pore diameter of the separator is preferably 60% or higher with respect to the frequency in the entire interval.

The frequency of mode of pore diameter of the separator (referred to as 'value B' hereafter) being 60% or greater indicates that the pores existing in the separator concentrate particularly in a specific diameter. When the value B is less than 60%, fluctuation in pore diameter cannot be reduced below a fixed level.

Note that the mode of pore diameter of this embodiment is the most frequently occurring diameter with a pore diameter distribution of pores according to "'TEST METHOD B' of ASTM F316-03".

A means of making the value B of the separator be 60% or greater in this embodiment focuses on degree of refining the fibrillated, regenerated cellulose fibers for the separator. Freeness (CSF value) according to 'JIS P8121-2' is used as an index indicating the degree of refining in this embodiment.

When refining refinable fibers, the CSF value decreases gradually, reaching a lower limit. When refining is further continued here, the CSF value turns to rise again. The CSF value of the fibers used in the separator of this embodiment is preferably 100 ml or less when in the range of decreasing CSF values, and 700 ml or less when in the range of rising CSF values.

When the decreasing CSF value is greater than 100 ml, the degree of refining fibers is low, and thus the value B of the separator easily becomes less than 60%, and improvement of shielding performance is impossible. Moreover, when the rising CSF value continues to increase and exceeds 700 ml, the fibers become too fine, fibers falling out from a papermaking screen during paper making increases, and therefore the value B easily becomes less than 60%.

Equipment to be used for refining the regenerated cellulose fibers used for the separator of this embodiment may be anything that is used for making paper from normal paper-making raw material. For example, a beater, a conical refiner, a disk refiner, a high-pressure homogenizer etc. may be used.

Moreover, it is more preferable that frequency within 10% above or below the mode of pore diameter of the separator is 75% or greater with respect to the frequency in the entire interval. The range of frequency within 10% above or below the mode of pore diameter of the separator (referred to as 'value C' hereafter) being 75% or greater of the entire interval indicates that a majority of the pores existing in the separator has a specified diameter or distributed thereabouts. Since fluctuation in pore diameter of the separator becomes even less, the shielding performance can be further improved. With the value C of less than 75%, fluctuation in pore diameter cannot be reduced below a certain level.

It is preferable for porosity of the separator of this embodiment to be 35 to 80%. With a porosity of the separator of less than 35%, there is too little space within the nonwoven fabric, and retention of electrolytic solution is reduced, leading to reduction in capacity of the electrochemical element and increase in resistance.

On the other hand, when the porosity exceeds 80%, denseness of the separator may also decrease, and thus the shielding property cannot be improved. From the perspective of shielding property, the porosity of the separator is further preferably 35 to 65%, and even further preferably 35 to 55%.

Thickness of the separator of this embodiment is preferably 5 to 30 $\mu$m. When thickness of the separator is less than 5 $\mu$m, even with the technology of the present invention, distance between paired electrodes is reduced, and the short-circuit defect rate therefore cannot be reduced. Moreover, when the thickness exceeds 30 $\mu$m, distance between electrodes is increased, thereby increasing resistance of the electrochemical element.

<Method for measuring separator physical properties>

Measurements of separators of working examples, comparative examples, and a conventional example described below are measured using the following methods.

CSF values

CSF values are measured in accordance with JIS P8121-2 'Pulps- Determination of drainability- Part 2: "Canadian Standard" freeness method.'

Thickness

Thickness of separators is measured using a method of folding ten pieces of paper according to '5.1.3 Case of folding paper and measuring thickness' with the micrometer of 'a) Case of using an external micrometer' in '5.1.1 Measuring device and measuring method' that are stipulated in JIS C2300-2 "Cellulosic papers for electrical purposes- Part 2: Methods of test- 5.1 Thickness".

Porosity

Porosity of the separator is found using the following Equation 1.

$$\text{(True specific gravity of separator - separator density) / True specific gravity of separator} \times 100\ (\%) \dots \text{Equation 1}$$

For example, porosity of a separator made of only cellulose having a density of 0.4 g/cm$^3$ is found in the following manner.
In this embodiment, the true specific gravity of cellulose is 1.5, and is plugged into the above Equation 1 to give (1.5 - 0.4) / 1.5 $\times$ 100 = 73.3 (%).
As another example, specific gravity of a separator having a density of 0.45 g/cm$^3$ and made of 30% by mass synthetic fibers having a specific gravity of 1.2 and 70% by mass cellulose fibers having a specific gravity of 1.5 is 1.5 $\times$ 0.7 + 1.2 $\times$ 0.3 = 1.41. Plugging this result into the above Equation 1 gives (1.41 - 0.45) / 1.41 $\times$ 100 = 68.1 (%) for the porosity of the separator.

Density

Density of a separator in a bone-dry state is measured using a method stipulated in method B of JIS C2300-2 "Cellulosic papers for electrical purposes-Part 2: Methods of test- 7.0A Density".

Value A, value B. and value C

Pore diameter distribution with the width of interval of 0.01 $\mu$m is found by '"TEST METHOD B" of ASTM F316-03' using the CFP-1200-AEXL-ESA (manufactured by Porous Materials, Inc.). GALWICK (manufactured by Porous Materials Inc.) is used as a test liquid.
Note that 0.015 $\mu$m pores are divided into an interval representing 0.02 $\mu$m and that 0.020 $\mu$m pores are divided into an interval representing 0.02 $\mu$m.
Ratio (%) of frequency in the interval ranging from 0.05 to 1.00 $\mu$m to frequency in the total interval is found using the pore diameter distribution and set as value A. Frequency (%) of the mode of pore diameter with the pore diameter distribution is read and set as value B. Moreover, frequency (%) within the range of 10% above or below the mode of pore diameter of the separator is found and set as value C.

<Manufacturing a lithium-ion secondary battery using a separator>

A manufacturing method for a lithium-ion secondary battery using the separator of this embodiment is described below. More specifically, two kinds of lithium-ion secondary batteries: a cylindrical lithium-ion secondary battery and a coin-type lithium secondary battery are manufactured.
The cylindrical lithium-ion secondary battery is manufactured in the following manner.
A lithium cobalt oxide electrode for lithium-ion secondary batteries is used as a positive electrode material, a graphite electrode is used as a negative electrode material, and they are wound together with the separator so as to obtain a lithium-ion secondary battery element. The element is stored in a cylindrical case with bottom, an electrolyte in which lithium hexafluorophosphate is dissolved as an electrolyte in a mixed solvent of ethylene carbonate and diethyl carbonate is injected, and is then sealed using a press machine, thereby manufacturing a cylindrical lithium-ion secondary battery having a rated voltage of 3.7 V, a rated capacity of 3000 mAh, a diameter of 18 mm, and height of 65 mm.

The coin-type lithium-ion secondary battery is manufactured in the following manner.

A lithium cobalt oxide electrode for lithium-ion secondary batteries is used as a positive electrode material, a graphite electrode is used as a negative electrode material, and they are layered with a separator. An electrolytic solution in which lithium hexafluorophosphate is dissolved as an electrolyte in a mixed solvent of diethyl carbonate and ethylene carbonate is impregnated, and is then crimped and sealed, thereby manufacturing a coin-type lithium-ion secondary battery having a rated voltage of 3.6 V, a rated capacity of 30 mAh, a diameter of 20 mm, and height of 3.2 mm.

<Manufacturing an electric double-layer capacitor using a separator>

A manufacturing method for an electric double-layer capacitor using the separator of this embodiment is described below.

Activated carbon electrodes and the separator of this embodiment are alternately overlapped so as to obtain an electric double-layer capacitor element. The element is stored in an aluminum case, an electrolytic solution in which triethylmethyl ammonium hexafluorophosphate is dissolved in acetonitrile is injected, vacuum impregnated, and then sealed, thereby manufacturing an electric double-layer capacitor having a rated voltage of 2.5 V, a rated capacity of 3000 F, and dimensions $55 \times 55 \times 155$ mm (W $\times$ D $\times$ L).

<Manufacturing an aluminum electrolytic capacitor using a separator>

A manufacturing method for an aluminum electrolytic capacitor using the separator of this embodiment is described below.

Positive-electrode aluminum foil and negative-electrode aluminum foil on which etching processing and oxide-film forming processing have been performed, and a separator are interposed therebetween and wound so as to obtain a capacitor element. An electrolytic solution is impregnated in the capacitor element, placed in a case, and then sealed, thereby manufacturing an aluminum electrolytic capacitor having a diameter of 10 mm, height of 20 mm, a rated voltage of 63 V, and a rated capacity of 120 $\mu$F. Note that the length of the positive-electrode aluminum foil when manufacturing the capacitor element is fixed.

<Method of evaluation of electrochemical element properties>

1000 of the electrochemical element of this embodiment are manufactured for the respective examples and are used for the following property evaluation. Property evaluation is conducted using the following method under the following conditions.

Short-circuit defect rate

For a short-circuit defect rate of the electrochemical element, cases where a charged voltage does not rise to the rated voltage are regarded as short-circuit defects, and the number of the electrochemical elements that have these short-circuit defects is divided by the number of the electrochemical elements used for electrostatic capacitance measurement so as to give a short-circuit defect ratio as a percentage.

Defect rate in overcharge test

An overcharge test is conducted on coin-type and cylindrical lithium-ion secondary batteries, wherein the resulting defect rate is an index of shielding property of the separator. This test is conducted for expressing, in numerical form, difference in shielding property of the separators that do not appear in a typical short-circuit defect test.

More specifically, when the manufactured lithium-ion secondary batteries are charged with a constant current until 5.0 V at rate of 1.0C and at 60°C, cases where the charging voltage does not rise to the rated voltage are considered as defects. The number of the electrochemical elements with a defect is divided by the total number of the electrochemical elements used for electrostatic capacitance measurement so as to give a defect rate in the overcharge test as a percentage.

Internal resistance

Internal resistance of the lithium-ion secondary battery is measured in accordance with '8.6.3 AC internal resistance' stipulated in JIS C 8715-1 'Secondary lithium cells and batteries for use in industrial applications - Part 1: Tests and requirements of performance'.

Internal resistance of the electric double-layer capacitor is measured using an a.c. resistance method of '4.6 Internal resistance' stipulated in JIS C 5160-1 'Fixed electric double-layer capacitors for use in electronic equipment'.

Impedance of aluminum electrolytic capacitor

Impedance of an aluminum electrolytic capacitor is measured using an LCR meter at 20°C and a frequency of 100 kHz.

Discharge capacity

Discharge capacity of the lithium-ion secondary battery is measured in accordance with '8.4.1 Discharge performance test' stipulated in JIS C 8715-1 'Secondary lithium cells and batteries for use in industrial applications - Part 1 : Tests and requirements of performance'.

Electrostatic capacity

Electrostatic capacity of the electric double-layer capacitor is found using a constant-current discharge method of '4.5 Electrostatic capacity' stipulated in JIS C 5160-1 'Fixed electric double-layer capacitors for use in electronic equipment'.

Electrostatic capacity of the aluminum electrolytic capacitor is measured using an LCR meter at 20°C and a frequency of 100 kHz.

Next, specific working examples, comparative examples, and a conventional example according to this embodiment are described. Examples using separators according to these working examples etc. for lithium-ion secondary batteries, electric double-layer capacitors, and aluminum electrolytic capacitors are described here. Note that CSF values of the respective examples indicate CSF values in a decreasing stage as long as it is not particularly stated.

[Working Example 1]

100% by mass solvent spun cellulose fibers (specifically, Lyocell (registered trademark) fibers are used) that are regenerated cellulose fibers are refined so as to obtain a raw material having a CSF value of 100 ml. The raw material is made into paper using a Fourdrinier machine, and then thickness-regulated at a linear pressure of 0.5 kN/cm using a resin roll and a metal roll so as to obtain a separator having a thickness of 20 $\mu$m and density of 0.35 g/cm$^3$. Porosity of the separator of Working Example 1 is 76.7%, value A is 90.5%, mode of pore diameter is 0.70 $\mu$m, value B is 64.9%, and value C is 76.8%.

[Working Example 2]

30% by mass solvent spun cellulose fibers and 70% by mass broad leaf tree dissolving pulp (LDP) are mixed and refined so as to obtain a raw material having a CSF value of 0 ml. The raw material is made into paper using a Fourdrinier machine, and is then thickness-regulated at a linear pressure of 1.0 kN/cm using a resin roll and a metal roll so as to obtain a separator having a thickness of 30 $\mu$m and density of 0.50 g/cm$^3$. Porosity of the separator of Working Example 2 is 66.7%, value A is 100%, mode of pore diameter is 0.40 $\mu$m, value B is 70.2%, and value C is 78.5%.

[Reference Example 1]

Solvent spun cellulose fibers are refined so as to obtain a raw material having a CSF value of 150 ml. The raw material is made into paper using a Fourdrinier machine, and is then thickness-regulated at a linear pressure of 4.0 kN/cm using a resin roll and a metal roll so as to obtain a separator having a thickness of 30 $\mu$m and density of 0.60 g/cm$^3$. Porosity of this separator is 60.0%, value A is 92.0%, mode of pore diameter is 0.51 $\mu$m, value B is 55.1%, and value C is 89.0%.

[Reference Example 2]

Solvent spun cellulose fibers are refined so as to obtain a raw material having a CSF value of 75 ml. The raw material is formed into a sheet using a Fourdrinier machine, and is then compressed under a linear pressure of 0.3 kN/cm using a resin touch roll so as to obtain a separator having a thickness of 25 $\mu$m and density of 0.27 g/cm$^3$. Porosity of this separator is 82.0%, value A is 92.0%, mode of pore diameter is 0.82 $\mu$m, value B is 62.3%, and value C is 73.0%.

[Comparative Example 1]

Solvent spun cellulose fibers are refined so as to obtain a raw material having a rising CSF value of 680 ml. The raw material is formed into a sheet using a Fourdrinier machine, and is then compressed under a linear pressure of 0.2 kN/cm using a resin touch roll so as to obtain a separator having a thickness of 30 $\mu$m and density of 0.65 g/cm$^3$. Porosity of this separator is 56.7%, value A is 75.0%, mode of pore diameter is 0.71 $\mu$m, value B is 67.3%, and value C is 76.6%.

[Comparative Example 2]

Solvent spun cellulose fibers are refined so as to obtain a raw material having a CSF value of 0 ml. The raw material is made into paper using a Fourdrinier machine, and is then thickness-regulated under a linear pressure of 0.3 kN/cm using a resin roll and a metal roll so as to obtain a separator having a thickness of 40 $\mu$m and density of 0.33 g/cm$^3$. Porosity of this separator is 78.0%, value A is 97.7%, mode of pore diameter is 0.42 $\mu$m, value B is 71.1%, and value C is 85.4%.

[Conventional Example 1]

A commercially available polyethylene microporous film having a thickness of 25 $\mu$m and porosity of 36.8% is used as a separator for Conventional Example 1. Value A of this separator is 21.6%, mode of pore diameter is 0.03 $\mu$m, value B is 88.0%, and value C is 96.6%.

[Working Example 3]

Solvent spun cellulose fibers are refined so as to obtain a raw material having a rising CSF value of 350 ml. The raw material is made into paper using a Fourdrinier machine, and is then thickness-regulated under a linear pressure of 5.5 kN/cm using a resin roll and a metal roll so as to obtain a separator having a thickness of 5 $\mu$m and density of 0.70 g/cm$^3$. Porosity of this separator is 53.3%, value A is 100.0%, mode of pore diameter is 0.45 $\mu$m, value B is 79.0%, and value C is 91.0%.

[Working Example 4]

85% by mass solvent spun cellulose fibers having a rising CSF value of 650 ml and 15% by mass polyethylene terephthalate fibers (PET fibers) are mixed so as to obtain a papermaking raw material. The raw material is made into paper using a Fourdrinier machine, and is then thickness-regulated under a linear pressure of 7.5 kN/cm using two metal rolls so as to obtain a separator having a thickness of 15 $\mu$m and density of 0.85 g/cm$^3$. Porosity of this separator is 39.2%, value A is 100.0%, mode of pore diameter is 0.28 $\mu$m, value B is 78.9%, and value C is 93.5%.

[Comparative Example 3]

The same raw material as in Working Example 3 is made into paper using a Fourdrinier machine, and is then thickness-regulated under a linear pressure of 7.0 kN/cm using two metal rolls so as to obtain a separator having a thickness of 3 $\mu$m and density of 0.90 g/cm$^3$. Porosity of this separator is 37.8%, value A is 100.0%, mode of pore diameter is 0.47 $\mu$m, value B is 60.6%, and value C is 92.2%.

[Comparative Example 4]

Solvent spun cellulose fibers are refined so as to obtain a raw material having a rising CSF value of 500 ml. The raw material is made into paper using a Fourdrinier machine, and is then thickness-regulated under a linear pressure of 8.0 kN/cm using two metal rolls so as to obtain a separator having a thickness of 5 $\mu$m and density of 1.05 g/cm$^3$. Porosity of this separator is 30.0%, value A is 95.7%, mode of pore diameter is 0.21 $\mu$m, value B is 88.8%, and value C is 95.7%.

[Conventional Example 2]

Alumina powder is applied to a polyethylene microporous film having a thickness of 25 $\mu$m and porosity of 32.0% and then dried so as to obtain a separator having a thickness of 30 $\mu$m and density of 57.6 g/cm$^3$. Value A of this separator is 5.0%, mode of pore diameter is 0.02 $\mu$m, value B is 91.7%, and value C is 98.0%.

Using the separators obtained in Working Example 1, Working Example 2, Reference Example 1, Reference Example 2, Comparative Example 1, Comparative Example 2, and Conventional Example 1, coin-type lithium-ion secondary batteries having a rated voltage of 3.6V, a rated capacity of 30 mAh, a diameter of 20 mm, and height of 3.2 mm, and aluminum electrolytic capacitors having a rated voltage of 63V, a rated capacity of 120 μF, a diameter of 10 mm, and height of 20 mm are manufactured and then evaluated.

Physical properties of these separators and the evaluation results of the lithium-ion secondary batteries and aluminum electrolytic capacitors manufactured using the separators are given in Table 1.

[Table 1]

| | Separator | | | | | | | Coin-type lithium-ion secondary battery | | | Aluminum electrolytic capacitor | |
|---|---|---|---|---|---|---|---|---|---|---|---|---|
| | Fiber type | Ratio [% by mass] | Thickness [μm] | Porosity [%] | Value A [%] | Value B [%] | Value C [%] | Internal resistance [mΩ] | Short-circuit defect rate [%] | Defect rate in over-charge test [%] | Impedance [mΩ] | Short-circuit defect rate [%] |
| Working Example 1 | Lyocell | 100 | 20 | 76.7 | 90.5 | 64.9 | 76.8 | 280 | 0 | 0.2 | 235 | 0 |
| Working Example 2 | Lyocell | 30 | 30 | 66.7 | 100.0 | 70.2 | 78.5 | 300 | 0 | 0.2 | 260 | 0 |
| | LDP | 70 | | | | | | | | | | |
| Reference Example 1 | Lyocell | 100 | 30 | 60.0 | 92.0 | 55.1 | 89.0 | 290 | 0 | 0.3 | 245 | 0 |
| Reference Example 2 | Lyocell | 100 | 25 | 82.0 | 92.0 | 62.3 | 73.0 | 215 | 0 | 0.6 | 185 | 0 |
| Comparative Example 1 | Lyocell | 100 | 30 | 56 7 | 75.0 | 67 3 | 76.6 | 295 | 0.6 | 0.9 | 250 | 0.1 |
| Comparative Example 2 | Lyocell | 100 | 40 | 78.0 | 97.7 | 71.1 | 85.4 | 350 | 0 | 0.1 | 310 | 0 |
| Conventional Example 1 | Polyethylene microporous film | | 25 | 36.8 | 21.6 | 88.0 | 96.6 | 400 | 0 | 0 | 350 | 0 |

EP 3 438 999 A1

**EP 3 438 999 A1**

Using the separators obtained in Working Example 3, Working Example 4, Comparative Example 3, Comparative Example 4, and Conventional Example 2, cylindrical lithium-ion secondary batteries having a rated voltage of 3.7V, a rated capacity of 3000 mAh, a diameter of 18 mm, and height of 65 mm, and multilayered electric double-layer capacitors having a rated voltage of 2.5V, a rated capacity of 3000 F, and dimensions 55 × 55 × 155 mm (W × D × L) are manufactured and then evaluated.

Physical properties of these separators and the evaluation results of the lithium-ion secondary batteries and electric double-layer capacitors manufactured using the separators are given in Table 2.

**12**

[Table 2]

| | Separator | | | | | | | Cylindrical lithium-ion secondary battery | | | Electric double-layer capacitor | |
|---|---|---|---|---|---|---|---|---|---|---|---|---|
| | Fiber type | Ratio [% by mass] | Thickness [μm] | Porosity [%] | Value A [%] | Value B [%] | Value C [%] | Internal resistance [mΩ] | Short-circuit defect rate [%] | Defect rate in over-charge test [%] | Internal resistance [mΩ] | Short-circuit defect rate [%] |
| Working Example 3 | Lyocell | 100 | 5 | 53.3 | 100.0 | 79.0 | 91.0 | 49 | 0 | 0 | 0.36 | 0 |
| Working Example 4 | Lyocell / PET | 85 / 15 | 15 | 39.2 | 100.0 | 78.9 | 93.5 | 60 | 0 | 0 | 0.45 | 0 |
| Reference Example 3 | Lyocell | 100 | 3 | 37.8 | 100.0 | 60.6 | 92.2 | 47 | 0.2 | 0.6 | 0.32 | 0.3 |
| Reference Example 4 | Lyocell | 100 | 5 | 30.0 | 95.7 | 88.8 | 95.7 | 70 | 0 | 0 | 0.51 | 0 |
| Conventional Example 2 | Polyethylene microporous film + Alumina layer | | 30 | 57.6 | 5.0 | 91.7 | 98.0 | 85 | 0 | 0 | 0.60 | 0 |

The evaluation results from the respective working examples, comparative examples and conventional examples are explained in detail below.

The separators of Working Example 1 and Working Example 2 have thicknesses of 20 to 30 $\mu$m, value A of 90% or greater, value B of 60% or greater, value C of 75% or greater, and porosity within the range of 35 to 80%. The lithium-ion secondary batteries and aluminum electrolytic capacitors manufactured using the separators of Working Example 1 and Working Example 2 do not have short-circuit defects. Moreover, the internal resistance is also sufficiently smaller than in the conventional example.

The lithium-ion secondary batteries of Reference Example 1 and Reference Example 2 do not have any short-circuit defects, and the internal resistance is also sufficiently smaller than in the conventional example. However, the defect rate in the overcharge test is 0.3% or greater, which is slightly higher than in Working Example 1 and Working Example 2. This is thought to be because value B of the separator in Reference Example 1 is 55.1%, and value C of the separator in Reference Example 2 is 73.0%.

It can be seen from Working Example 1, Working Example 2, Reference Example 1 and Reference Example 2 that a value B of the separator of 60% or greater and a value C of 75% or greater are preferred.

Value A of the separator of Comparative Example 1 is 75.0%. Short-circuit defects occur with the lithium-ion secondary battery and the aluminum electrolytic capacitor using the separator of Comparative Example 1. It is seen that since the separator of Comparative Example 1 has a short-circuit defect regardless that the porosity is lower than the separators of Working Example 1 and Working Example 2, value A of the separator is preferably 90.0% or greater.

The separator of Comparative Example 2 has a higher porosity than the separators of Working Example 1 and Working Example 2. However, the internal resistance of the lithium-ion secondary battery using the separator of Comparative Example 2 is 10% or greater than in the respective working examples. This is because the thickness of the separator of Comparative Example 2 is 40 $\mu$m, which is thick, and it can be seen from Working Example 1, Working Example 2 and Comparative Example 2 that the thickness of the separator is preferably 30 $\mu$m or less.

The separators of Working Example 3 and Working Example 4 have thicknesses of 5 to 15 $\mu$m, value A of 90% or greater, value B of 60% or greater, value C of 75% or greater, and porosity within the range of 35 to 80%. The lithium-ion secondary batteries and electric double-layer capacitors manufactured using the separators of Working Example 3 and Working Example 4 do not have any short-circuit defects. Moreover, the internal resistance is also sufficiently smaller than in the conventional example.

The separator of Comparative Example 3 is made using the same raw material as in Working Example 3 and adjusted to have a thickness of 3 $\mu$m, and porosity of the separator of Comparative Example 3 is low. In spite of this, the lithium-ion secondary battery using the separator of Comparative Example 3 have a short-circuit defect. It can be seen from this that when the thickness of the separator drops below 5 $\mu$m, there is a possibility that a short-circuit defect will occur.

The separator of Comparative Example 4 has a low porosity of 30.0%. As a result, the internal resistance of the lithium-ion secondary battery using the separator of Comparative Example 4 is at least 20% larger than that of the battery using the separator of Working Example 3 having the same thickness. Moreover, its resistance is at least 10% greater than that of the lithium-ion secondary battery using the separator of Working Example 4 that is thicker than that of Comparative Example 4. It can be seen from Working Example 3, Working Example 4 and Comparative Example 4 that porosity of the separator is preferably 35% or higher.

The separator of this embodiment uses cellulose fibers having excellent heat resistance in any of the above working examples, and increase in heat resistance and safety of the electrochemical element may be anticipated, compared with the conventional polyethylene microporous film.

Moreover, lithium-ion secondary batteries, electric double-layer capacitors, and aluminum electrolytic capacitors may be used as electrochemical elements to which the separator according to this embodiment of the present invention is applicable. Electrode material, electrolytic material, and other components used therefor are not particularly limited, and various materials may be used.

Furthermore, the separator for electrochemical elements according to this embodiment of the present invention is applicable to not only the above-given electrochemical elements, but also lithium-ion capacitors and lithium primary batteries that are also electrochemical elements.

**Claims**

1. A separator for electrochemical elements that interposes between paired electrodes, is made of a nonwoven fabric formed by accumulating fibers in a sheet form, and retains an electrolytic solution, wherein frequency of pores of the nonwoven fabric having diameters of 0.05 to 1.00 $\mu$m is 90% or greater of all pores.

2. The separator for electrochemical elements according to claim 1, wherein frequency of mode of pore diameter of the nonwoven fabric is 60% or greater with respect to frequency in the entire interval.

3. The separator for electrochemical elements according to claim 1 or claim 2, wherein frequency within 10% above or below mode of pore diameter of the separator is 75% or greater with respect to the frequency in the entire interval.

4. The separator for electrochemical elements according to any one of claim 1 to claim 3, wherein porosity of the nonwoven fabric is 35 to 80%.

5. The separator for electrochemical elements according to any one of claim 1 to claim 4, wherein thickness of the nonwoven fabric is 5 to 30 μm.

6. The separator for electrochemical elements according to any one of claim 1 to claim 5, wherein the fibers forming the nonwoven fabric include regenerated cellulose fibers.

7. An electrochemical element using the separator for electrochemical elements according to any one of claim 1 to claim 6.

8. The electrochemical element according to claim 7, wherein the electrochemical element is any one of an aluminum electrolytic capacitor, an electric double-layer capacitor, a lithium-ion capacitor, a lithium primary battery, or a lithium-ion secondary battery.

## INTERNATIONAL SEARCH REPORT

| | International application No. |
|---|---|
| | PCT/JP2017/011532 |

A. CLASSIFICATION OF SUBJECT MATTER
*H01G9/02*(2006.01)i, *H01G11/52*(2013.01)i, *H01M2/16*(2006.01)i

According to International Patent Classification (IPC) or to both national classification and IPC

B. FIELDS SEARCHED

Minimum documentation searched (classification system followed by classification symbols)
H01G9/02, H01G11/52, H01M2/16

Documentation searched other than minimum documentation to the extent that such documents are included in the fields searched
| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2008-124064 A (Asahi Kasei Fibers Corp.), 29 May 2008 (29.05.2008), paragraphs [0032], [0034], [0037], [0044]; table 1 (Family: none) | 1-8 |
| A | JP 2014-56953 A (Mitsubishi Paper Mills Ltd.), 27 March 2014 (27.03.2014), paragraphs [0035] to [0040]; tables 1 to 2 (Family: none) | 1-8 |

☐ Further documents are listed in the continuation of Box C.   ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 07 June 2017 (07.06.17) | 20 June 2017 (20.06.17) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012008559 A
- JP 2000198866 A